# EUROPEAN PATENT SPECIFICATION

(11) **EP 4 069 624 B1**
(45) Date of publication and mention of the grant of the patent: **24.01.2024**
(21) Application number: 21723682.7
(22) Date of filing: 29.04.2021
(51) Int. Cl.: B66C 13/06

(54) **A MECHANICAL ANTI SWAY CONTROL METHOD WHICH CONTROL TWO COUNTERPART MOTOR DIFFERENT SPEED AS ZERO BY PI CONTROLLER ON CRANE**
MECHANISCHES ANTISCHWINGUNGSSTEUERVERFAHREN, DAS ZWEI GEGENMOTOREN MIT UNTERSCHIEDLICHER GESCHWINDIGKEIT ALS NULL DURCH EINE PI-STEUERUNG AUF EINEM KRAN STEUERT
PROCÉDÉ DE COMMANDE MÉCANIQUE ANTI-BALANCEMENT QUI COMMANDE DEUX MOTEURS HOMOLOGUES DE VITESSES DIFFÉRENTES COMME ZÉRO PAR UN DISPOSITIF DE COMMANDE PI SUR UNE GRUE

(30) Priority: 30.04.2020 CN 202010367338
(43) Date of publication of application: 12.10.2022
(73) Proprietor: Siemens Aktiengesellschaft, 80333 München (DE)
(72) Inventor: YE, Fei, Shanghai, 200030 (CN); XU, Jian, Shanghai, 201206 (CN)
(74) Representative: Isarpatent
(86) International application number: PCT/EP2021/061282
(87) International publication number: WO 2021/219797

(56) References cited:
- GB-A- 1 284 985
- US-A- 6 135 301
- US-A1- 2019 193 998

## Description

### Technical Field

The present application relates to the field of crane control, and specifically to a method, device and system for controlling a crane, and a storage medium.

### Background Art

The hoist of a rail crane or a tire crane without anti-sway control sways significantly when the trolley or cart of the crane travels, and a driver needs to manually track the trolley or crane to reduce the amplitude of sway of the hoist; this anti-sway operation affects the operational efficiency.

In a mechanical anti-sway solution, four anti-sway motors are used to pull the four corners of the hoist through a steel wire rope to reduce the amplitude of sway of the hoist.

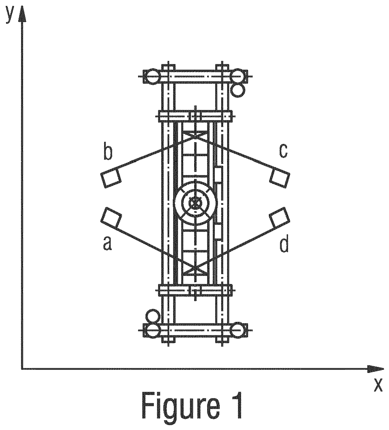

The existing mechanical anti-sway principle is shown in Figure 1. For example, when the trolley accelerates in the negative direction of the x-axis (for example, the front direction of the trolley), the hoist sways in the positive direction of the x-axis, and motor a and motor b pull the hoist by an appropriate torque, thereby reducing the amplitude of sway of the hoist in the positive direction of the x-axis. Likewise, when the trolley travels in the positive direction of the x-axis (for example, the rear direction of the trolley), the hoist sways in the negative direction of the x-axis, and motor c and motor d pull the hoist with an appropriate torque, thereby reducing the amplitude of sway of the hoist in the negative direction of the x-axis; however, a specifically used control method is complicated, which makes it difficult to achieve good control results.

At present, for mechanical prevention of sway, the control method of calculating the horizontal acceleration torque of the load is generally adopted. The four motors all output a small torque to pull the steel wire rope of the hoist so that it is tightly stretched. When the trolley travels alone, if it is accelerated in the negative direction of the x-axis (for example, the front direction of the trolley), the torque of motor a and of motor b is increased in a certain proportion on the basis of the total weight of the hoist and the load. At the end of the acceleration, the increased torque of motor a and motor b is removed, the torque of motor c and motor d is increased at the same time, and the time during which the torque needs to be maintained is roughly estimated or, on the basis of a pendulum cycle, roughly calculated; finally, the torque of the four anti-sway motors is increased at the same time, and the time during which the torque needs to be maintained is adjusted by using the slope of the steel wire rope and on the basis of the actual effect. When the cart travels alone, the same method is used. With this control method, the logic judgment procedure for various situations is complicated, and debugging needs to be performed repeatedly to change parameters. Moreover, when the driver controls operations by repeated sudden accelerations and decelerations, the effect of anti-sway control is poor, and even an exactly opposite effect is produced; in addition, when the hoist is operated in conjunction with a trolley or a cart, or when a trolley and a cart are operated in conjunction, the debugging becomes even more complicated. US 2019/193998 A1 describes an operating method for a crane installation with a trolley for transporting a load and a computer program. US 2019/193998 A1 discloses a device according to the preamble of the independent claim 10 and a system according to the preamble of the independent claim 17. US 6 135 301 A describes a damping control apparatus for use in a device for hoisting a load-piece, said device having a transverse trolley being transversally movable and a driver thereof. GB 1 2 84 985 A describes a motor control system for use with equipment having at least one motorized horizontal motion.

### Summary of the Invention

An embodiment of the present application provides a method, a device and a system for controlling a crane, as well as a storage medium and a processor, so as to at least solve the problem in the prior art that it is difficult to control the sway of the hoist of a crane during operation.

According to one aspect of an embodiment of the present application, a method for controlling a crane is provided, comprising: acquiring a first speed value of a first motor, the first motor being configured to pull a first end of the hoist of a crane, wherein, when the first end of the hoist moves toward the first motor, the first speed value is positive, and when the first end of the hoist moves away from the first motor, the first speed value is negative; acquiring a second speed value of a second motor, the second motor being configured to pull a second end of the hoist of the crane, the second end being the opposite end of the first end in a trolley traveling direction of the crane, wherein, when the second end of the hoist moves toward the second motor, the second speed value is positive, and when the second end of the hoist moves away from the second motor, the second speed value is negative; acquiring a first speed difference between the first speed value and the second speed value; acquiring a first speed difference threshold; and, if the first speed difference between the first speed value and the second speed value is smaller than the first speed difference threshold, sending a control instruction to the first motor to increase a torque output value of the first motor in the trolley traveling direction.

Thus, when the hoist sways away from the first motor in the trolley traveling direction, the first motor on the opposite side of the hoist sway increases the torque output, thereby controlling the amplitude of sway of the hoist in the trolley traveling direction.

A method according to an exemplary embodiment of the present application further comprises: acquiring a third speed value of a third motor, the third motor being configured to pull a third end of the hoist of the crane, the third end being the opposite end of the first end in a cart traveling direction of the crane, wherein, when the third end of the hoist moves toward the third motor, the third speed value is positive, and when the third end of the hoist moves away from the third motor, the third speed value is negative; acquiring a second speed difference between the first speed value and the third speed value; acquiring a second speed difference threshold; and, if the second speed difference between the first speed value and the third speed value is smaller than the second speed difference threshold, sending a control instruction to the first motor to increase a torque output value of the first motor in the cart traveling direction.

Thus, when the hoist sways away from the first motor in the traveling direction of the crane, the first motor on the opposite side of the hoist sway increases the torque output, thereby controlling the amplitude of sway of the hoist in the cart traveling direction.

A method according to an exemplary embodiment of the present application further comprises: acquiring a first speed difference target value, wherein increasing a torque output value of the first motor in the trolley traveling direction comprises increasing a torque output value of the first motor until a first speed difference between the first speed value and the second speed value reaches the first speed difference target value.

Thus, an amplitude of sway of the hoist in the trolley traveling direction is kept within a desired range.

A method according to an exemplary embodiment of the present application further comprises: acquiring a second speed difference target value, wherein increasing a torque output value of the first motor in the cart traveling direction comprises increasing a torque output value of the first motor until a second speed difference between the first speed value and the third speed value reaches the second speed difference target value.

Thus, an amplitude of sway of the hoist in the cart traveling direction is kept within a desired range.

A method according to an exemplary embodiment of the present application further comprises: acquiring an enable instruction, the enable instruction being used to allow a control instruction to be sent to the first motor to increase a torque output value of the first motor.

Thus, it is possible to allow the control of an amplitude of sway of a hoist when an amplitude of sway of the hoist needs to be controlled.

A method according to an exemplary embodiment of the present application further comprises: acquiring a torque high limit and a torque low limit, wherein a torque output value of the first motor is limited to not exceed the torque high limit or the torque low limit.

Thus, torque output by a motor is limited to a required range.

A method according to an exemplary embodiment of the present application further comprises: acquiring a proportional parameter and an integral time, wherein a torque output value of the first motor is regulated on the basis of a proportional parameter and an integral time.

Thus, a torque output value of a motor is automatically regulatable as the state of the system changes.

A method according to an exemplary embodiment of the present application further comprises: if a first speed difference between the first speed value and the second speed value is greater than zero, sending a control instruction to the first motor to reduce a torque output value of the first motor in the trolley traveling direction.

Thus, when the hoist sways toward the first motor in the trolley traveling direction, the torque of the first motor is reduced, but the torque of the first motor is kept within a suitable range of torque.

A method according to an exemplary embodiment of the present application further comprises: if a second speed difference between the first speed value and the third speed value is greater than zero, sending a control instruction to the first motor to reduce a torque output value of the first motor in the cart traveling direction.

Thus, when the hoist sways toward the first motor in the cart traveling direction, the torque of the first motor is reduced, but the torque of the first motor is kept within a suitable range of torque.

According to another aspect of an embodiment of the present application, a device for controlling a crane is further provided, comprising: a first speed acquiring unit configured to acquire a first speed value of a first motor, the first motor being configured to pull a first end of the hoist of a crane, wherein, when the first end of the hoist moves toward the first motor, the first speed value is positive, and when the first end of the hoist moves away from the first motor, the first speed value is negative; a second speed acquiring unit configured to acquire a second speed value of a second motor, the second motor being configured to pull a second end of the hoist of a crane, the second end being the opposite end of the first end in a trolley traveling direction of the crane, wherein, when the second end of the hoist moves toward the second motor, the second speed value is positive, and when the second end of the hoist moves away from the second motor, the second speed value is negative; a first speed difference acquiring unit configured to acquire a first speed difference between the first speed value and the second speed value; a first speed difference threshold acquiring unit configured to acquire a first speed difference threshold; and a first PI controller configured to, if the first speed difference between the first speed value and the second speed value is smaller than the first speed difference threshold, send a control instruction to the first motor to increase a torque output value of the first motor in the trolley traveling direction.

Thus, when the hoist sways in a trolley traveling direction, the motor on the opposite side of the hoist sway increases the torque output, thereby controlling an amplitude of sway of the hoist in the trolley traveling direction.

A device according to an exemplary embodiment of the present application further comprises: a third speed acquiring unit configured to acquire a third speed value of a third motor, the third motor being configured to pull a third end of the hoist of a crane, the third end being the opposite end of the first end in a cart traveling direction of the crane, wherein, when the third end of the hoist moves toward the third motor, the third speed value is positive, and when the third end of the hoist moves away from the third motor, the third speed value is negative; a second speed difference acquiring unit configured to acquire a second speed difference between the first speed value and the third speed value; a second speed difference threshold acquiring unit configured to acquire a second speed difference threshold; and a second PI controller configured to, if the second speed difference between the first speed value and the third speed value is smaller than the second speed difference threshold, send a control instruction to the first motor to increase a torque output value of the first motor in the cart traveling direction.

Thus, when the hoist sways in a cart traveling direction, the motor on the opposite side of the hoist sway increases the torque output, thereby controlling an amplitude of sway of the hoist in the cart traveling direction.

A device according to an exemplary embodiment of the present application further comprises: a first target value acquiring unit configured to acquire a first speed difference target value, wherein increasing a torque output value of the first motor in the trolley traveling direction comprises increasing a torque output value of the first motor until a first speed difference between the first speed value and the second speed value reaches the first speed difference target value.

Thus, an amplitude of sway of the hoist in the trolley traveling direction is kept within a desired range.

A device according to an exemplary embodiment of the present application further comprises: a second target value acquiring unit configured to acquire a second speed difference target value, wherein increasing a torque output value of the first motor in the cart traveling direction comprises increasing a torque output value of the first motor until a second speed difference between the first speed value and the third speed value reaches the second speed difference target value.

Thus, an amplitude of sway of the hoist in the cart traveling direction is kept within a desired range.

A device according to an exemplary embodiment of the present application further comprises: an enable instruction acquiring unit configured to acquire an enable instruction, the enable instruction being used to allow a control instruction to be sent to the first motor to increase a torque output value of the first motor.

Thus, it is possible to allow the control of an amplitude of sway of a hoist when an amplitude of sway of the hoist needs to be controlled.

A device according to an exemplary embodiment of the present application further comprises: a limit value acquiring unit configured to acquire a torque high limit and a torque low limit, wherein a torque output value of the first motor is limited to not exceed the torque high limit or the torque low limit.

Thus, torque output by a motor is limited to a required range.

A device according to an exemplary embodiment of the present application further comprises: a regulation parameter acquiring unit configured to acquire a proportional parameter and an integral time, wherein a torque output value of the first motor is regulated on the basis of a proportional parameter and an integral time.

Thus, a torque output value of a motor is automatically regulatable as the state of the system changes.

According to another aspect of an embodiment of the present application, a system for controlling a crane is further provided, comprising: a first motor configured to pull a first end of the hoist of a crane; a second motor configured to pull a second end of the hoist of the crane, the second end being the opposite end of the first end in a trolley traveling direction of the crane; a device for controlling a crane, comprising: a first speed acquiring unit configured to acquire a first speed value of a first motor, wherein, when the first end of the hoist moves toward the first motor, the first speed value is positive, and when the first end of the hoist moves away from the first motor, the first speed value is negative; a second speed acquiring unit configured to acquire a second speed value of a second motor, wherein, when the second end of the hoist moves toward the second motor, the second speed value is positive, and when the second end of the hoist moves away from the second motor, the second speed value is negative; a first speed difference acquiring unit configured to acquire a first speed difference between the first speed value and the second speed value; a first speed difference threshold acquiring unit configured to acquire a first speed difference threshold; and a first PI controller configured to, if the first speed difference between the first speed value and the second speed value is smaller than the first speed difference threshold, send a control instruction to the first motor to increase a torque output value of the first motor in the trolley traveling direction.

Thus, when the hoist sways in a trolley traveling direction, the motor on the opposite side of the hoist sway increases the torque output, thereby controlling an amplitude of sway of the hoist in the trolley traveling direction.

A system according to an exemplary embodiment of the present application further comprises: a third motor configured to pull a third end of the hoist of a crane, the third end being the opposite end of the first end in a cart traveling direction of the crane; the device further comprises: a third speed acquiring unit configured to acquire a third speed value of a third motor, wherein, when the third end of the hoist moves toward the third motor, the third speed value is positive, and when the third end of the hoist moves away from the third motor, the third speed value is negative; a second speed difference acquiring unit configured to acquire a second speed difference between the first speed value and the third speed value; a second speed difference threshold acquiring unit configured to acquire a second speed difference threshold; and a second PI controller configured to, if the second speed difference between the first speed value and the third speed value is smaller than the second speed difference threshold, send a control instruction to the first motor to increase a torque output value of the first motor in the cart traveling direction.

Thus, when the hoist sways in a cart traveling direction, the motor on the opposite side of the hoist sway increases the torque output, thereby controlling an amplitude of sway of the hoist in the cart traveling direction.

According to another aspect of an embodiment of the present application, a storage medium is further provided, the storage medium comprising a stored program that when run, controls a device where the storage medium is located to implement a method according to an embodiment of the present application.

According to another aspect of an embodiment of the present application, a processor is further provided, the processor being configured to run a program that, when executed, implements a method according to an embodiment of the present application.

According to another aspect of an embodiment of the present application, a terminal is further provided, comprising: one or more processors, a memory, and one or more programs, wherein said one or more programs are stored in the memory and configured to be executed by said one or more processors, said one or more programs comprising a method for implementing a method according to an embodiment of the present application.

According to another aspect of an embodiment of the present application, a computer program product is further provided, the computer program product being tangibly stored on a computer-readable medium and comprising a computer-executable instruction that, when executed, causes at least one processor to implement a method according to an embodiment of the present application.

Thus, when the hoist sways, the motor on the opposite side of the hoist sway increases the torque output, thereby controlling an amplitude of sway of the hoist.

In an embodiment of the present application, a technical solution is provided in which a speed difference between a pair of anti-sway motors in a sway direction of the hoist is acquired, and the output torque of the motor on the opposite side in the sway direction is controlled on the basis of the speed difference; this at least solves the technical problem that it is difficult to control the swaying of the hoist of a crane during operation, improving the effect of preventing the hoist from swaying, and making it easy to configure an anti-sway system.

### Brief Description of the Drawings

The drawings explained herein are intended to provide a further understanding of the present application and constitute part of the present application. Exemplary embodiments of the present application and descriptions thereof are intended to explain the present invention, instead of improperly limiting the present invention, which is defined by the appended claims. Among the drawings,
Figure 1 is a schematic diagram for a hoist anti-sway system according to the prior art;
Figure 2 is a flowchart for a method for controlling a crane according to an embodiment of the present application;
Figure 3 is a schematic diagram for a method for controlling a crane according to an embodiment of the present application;
Figure 4 is a flowchart for a method for controlling a crane according to an exemplary embodiment of the present application;
Figure 5 is a schematic diagram for a method for controlling a crane according to an exemplary embodiment of the present application;
Figure 6 is a schematic diagram for the hoist swaying according to an exemplary embodiment of the present application;
Figure 7 is a block diagram for a device for controlling a crane according to an embodiment of the present application;
Figure 8 is a block diagram for a device for controlling a crane according to an exemplary embodiment of the present application;
Figure 9 is a block diagram for a system for controlling a crane according to an embodiment of the present application;
Figure 10 is a block diagram for a system for controlling a crane according to an exemplary embodiment of the present application; and
Figure 11 is a schematic diagram for a method for preventing sway in a system for controlling a crane according to an exemplary embodiment of the present application.

### Specific Embodiments

In order for those of ordinary skill in the art to better understand the present application, the technical solution provided in embodiments of the present invention will be described clearly and completely with reference to the drawings for embodiments of the present invention.

Note that terms such as "first" and "second" used in the specification and claims of the present application and the above-mentioned drawings are intended to differentiate between similar targets, instead of describing a specific sequence or a precedence relationship. It should be understood that terms used in this way are interchangeable where appropriate, so that embodiments of the present application described herein may be implemented in a sequence other than any of those shown or described herein. Further, terms "comprising", "provided with", and any variants thereof are intended to cover nonexclusive inclusion. For example, a process, method, system, product, or device comprising a series of steps or modules or units are not necessarily limited to explicitly listed steps or modules or units, and instead may include other steps or modules or units that are not explicitly listed or are intrinsic to these processes, methods, systems, products, or devices.

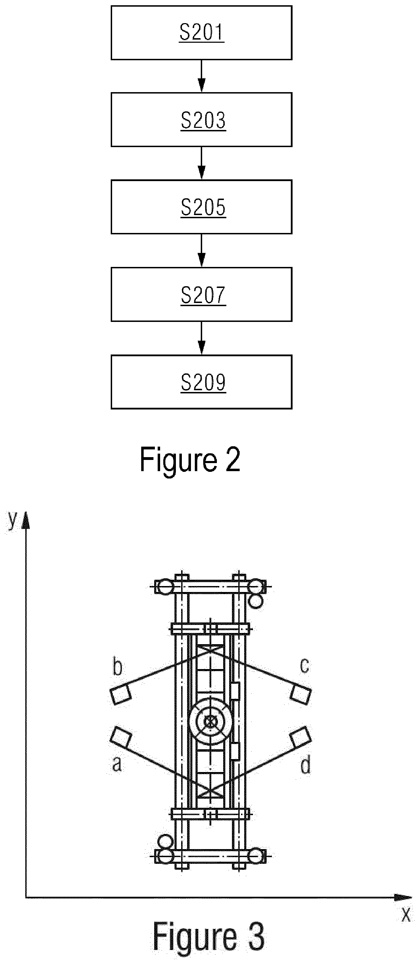

According to an embodiment of the present application, a method for controlling a crane is provided. Figure 2 is a flowchart for a method for controlling a crane according to an embodiment of the present application. As shown in Figure 2, a method for controlling a crane according to an embodiment of the present application comprises: step S201 of acquiring a first speed value of a first motor, the first motor being configured to pull a first end of the hoist of a crane, wherein, when the first end of the hoist moves toward the first motor, the first speed value is positive, and when the first end of the hoist moves away from the first motor, the first speed value is negative; step S203 of acquiring a second speed value of a second motor, the second motor being configured to pull a second end of the hoist of the crane, the second end being the opposite end of the first end in a trolley traveling direction of the crane, wherein, when the second end of the hoist moves toward the second motor, the second speed value is positive, and when the second end of the hoist moves away from the second motor, the second speed value is negative; step S205 of acquiring a first speed difference between the first speed value and the second speed value; step S207 of acquiring a first speed difference threshold; and step S209 of, if the first speed difference between the first speed value and the second speed value is smaller than the first speed difference threshold, sending a control instruction to the first motor to increase a torque output value of the first motor in the trolley traveling direction. It should be understood that the execution of step S205 of acquiring a first speed difference and of step S207 of acquiring a first speed difference threshold is not subject to a sequence, as long as a first speed difference and a first speed difference threshold are obtainable.

Figure 3 is a schematic diagram for a method for controlling a crane according to an embodiment of the present application. As shown in Figure 3, a trolley of the crane is traveling along the x-axis, and the four corners of the hoist are respectively pulled by anti-sway motors a, b, c, and d. When the hoist is stationary, the speed of the four anti-sway motors is zero. When the hoist moves up and down, the four anti-sway motors follow the hoist at basically the same speed. In an embodiment according to the present application, a speed difference between two motors positioned facing each other is used as a controlled quantity of sway, and the control quantity is a given speed (target speed difference) 0 (in other words, the speed difference between the two motors is 0); when the hoist is stationary, the actual speed of a motor is basically equal to the given speed. A speed difference between two motors positioned facing each other can accurately reflect the sway direction and sway strength of the hoist.

When the hoist is swaying in the trolley traveling direction (for example, when the trolley is traveling or the hoist is swaying for another reason), that is, along the x-axis, assume that the hoist is swaying in the positive direction of the x-axis, the anti-sway motor a is the first motor, and the anti-sway motor d on the opposite side of the x-axis direction is the second motor. For example, a first speed value of the first motor and a second speed value of the second motor are acquired by a sensor; when the first end of the hoist moves toward the first motor, the first speed value is positive; when the first end of the hoist moves away from the first motor, the first speed value is negative; when the second end of the hoist moves towards the second motor, the second speed value is positive; and when the second end of the hoist moves away from the second motor, the second speed value is negative. In this exemplary scenario, a first speed difference between the first speed value and the second speed value is negative. The first speed difference may be compared with a preset first speed difference threshold; if the first speed difference is smaller than the first speed difference threshold, then a torque output value of the first motor (anti-sway motor a) in the x-axis direction is increased. Thus, the first motor (anti-sway motor a) tightly stretches the first end of the hoist in the x-axis direction, thereby reducing the amplitude of sway of the hoist in the positive direction of the x-axis. Setting a first speed difference threshold allows the avoidance of the necessity to start the anti-sway process when the amplitude of sway is very low.

Taking, as an example, the sway of the hoist in the negative direction of the x-axis, the anti-sway motor c is the first motor, and the anti-sway motor b on the opposite side is the second motor; based on the same principle as described in the preceding example, if the first speed difference is smaller than the first speed difference threshold, then the torque output value of the first motor (anti-sway motor c) in the x-axis direction is increased. Thus, the first motor (anti-sway motor c) tightly stretches the first end of the hoist in the x-axis direction, thereby reducing the amplitude of sway of the hoist in the negative direction of the x-axis.

A method according to an embodiment of the present application may be applied to the anti-sway motors a, b, c, and d at the four corners of the hoist, respectively, so as to restrict the sway of the hoist in the trolley traveling direction.

Thus, when the hoist sways in the trolley traveling direction, the motor on the opposite side of the hoist sway increases the torque output, thereby controlling the amplitude of sway of the hoist in the trolley traveling direction.

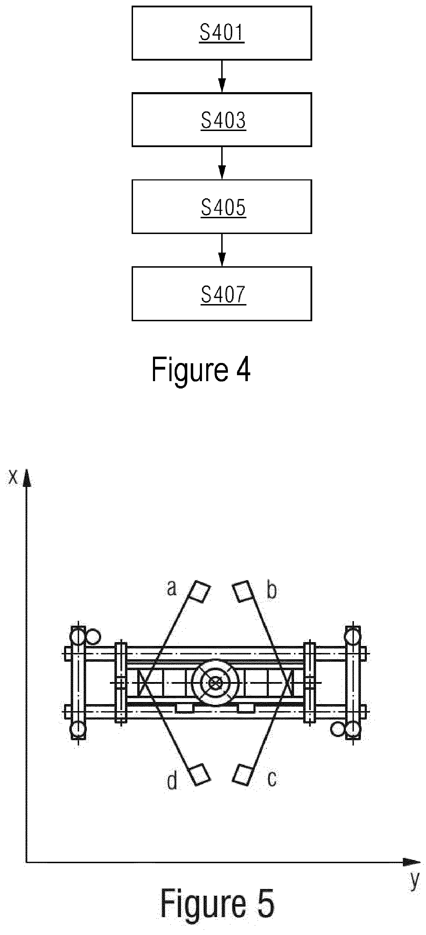

Figure 4 is a flowchart for a method for controlling a crane according to an exemplary embodiment of the present application. A method for controlling a crane according to an exemplary embodiment of the present application further comprises: step S401 of acquiring a third speed value of a third motor, the third motor being configured to pull a third end of the hoist of a crane, the third end being the opposite end of the first end in a cart traveling direction of the crane, wherein, when the third end of the hoist moves towards the third motor, the third speed value is positive, and when the third end of the hoist moves away from the third motor, the third speed value is negative; step S403 of acquiring a second speed difference between the first speed value and the third speed value; step S405 of acquiring a second speed difference threshold; and step S407 of, if the second speed difference between the first speed value and the third speed value is smaller than the second speed difference threshold, sending a control instruction to the first motor to increase a torque output value of the first motor in the cart traveling direction. It should be understood that the execution of step S403 of acquiring a second speed difference and of step S405 of acquiring a second speed difference threshold is not subject to a sequence, as long as a second speed difference and a second speed difference threshold are obtainable.

Figure 5 is a schematic diagram for a method for controlling a crane according to an exemplary embodiment of the present application. As shown in Figure 5, a cart of the crane is traveling along the y-axis, and the four corners of the hoist are respectively pulled by the anti-sway motors a, b, c, and d.

When the hoist is swaying in the cart traveling direction (for example, when the cart is traveling or the hoist is swaying for another reason), that is, along the y-axis, assume that the hoist sways along the positive direction of the y-axis, the anti-sway motor a is the first motor, and the anti-sway motor b on the opposite side in the y-axis direction is the third motor. For example, a third speed value of the third motor is further acquired by a sensor; when the first end of the hoist moves toward the first motor, the first speed value is positive; when the first end of the hoist moves away from the first motor, the first speed value is negative; when the third end of the hoist moves towards the third motor, the third speed value is positive; and when the third end of the hoist moves away from the third motor, the third speed value is negative. In this exemplary scenario, a second speed difference between the first speed value and the third speed value is negative. The second speed difference may be compared with a preset second speed difference threshold; if the second speed difference is smaller than the second speed difference threshold, then the torque output value of the first motor (anti-sway motor a) in the y-axis direction is increased. Thus, the first motor (anti-sway motor a) tightly stretches the first end of the hoist in the y-axis direction, thereby reducing the amplitude of sway of the hoist in the positive direction of the y-axis. Setting a second speed difference threshold allows the avoidance of the necessity to start the anti-sway process when the amplitude of sway is very low.

Taking, as an example, the sway of the hoist in the negative direction of the y-axis, the anti-sway motor c is the first motor, and the anti-sway motor d on the opposite side is the third motor; based on the same principle as described in the preceding example, if the second speed difference is smaller than the second speed difference threshold, then the torque output value of the first motor (anti-sway motor c) in the y-axis direction is increased. Thus, the first motor (anti-sway motor c) tightly stretches the first end of the hoist in the y-axis direction, thereby reducing the amplitude of sway of the hoist in the negative direction of the y-axis.

A method according to an embodiment of the present application may be applied to the anti-sway motors a, b, c, and d at the four corners of the hoist, respectively, so as to restrict the sway of the hoist in the cart traveling direction.

Thus, when the hoist sways in the cart traveling direction, the motor on the opposite side of the hoist sway increases the torque output, thereby controlling the amplitude of sway of the hoist in the cart traveling direction.

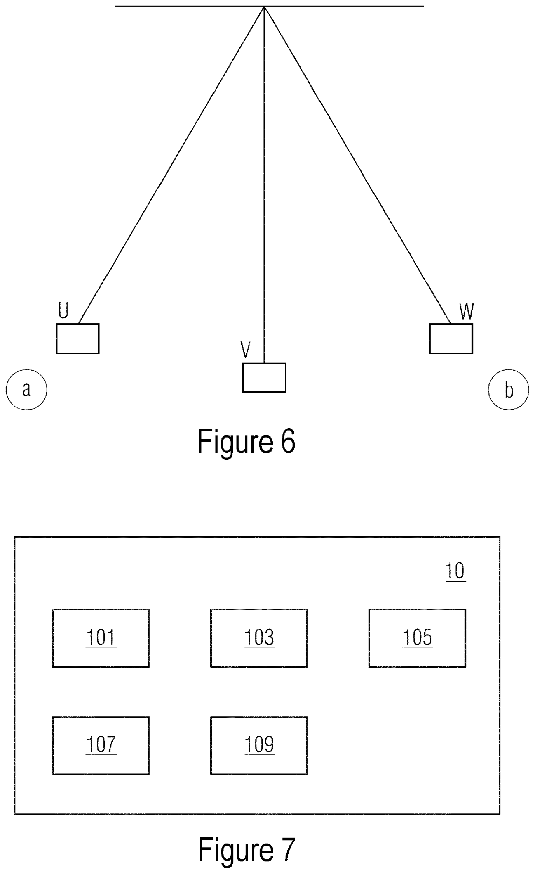

Figure 6 is a schematic diagram for hoist sway according to an exemplary embodiment of the present application. As shown in Figure 6, when stationary, the hoist is in position V. When swaying in the trolley traveling direction or the cart traveling direction, the hoist, for example, is in position U or position W. Taking, as an example, the anti-sway motors a and b located on the opposite sides in the sway direction, when the hoist sways to position U, that is, in the direction of the anti-sway motor a, the speed value of the anti-sway motor a is positive, the speed value of the anti-sway motor b is negative, the speed difference between the speed value of the anti-sway motor b and the speed value of the anti-sway motor a is negative, and the anti-sway motor b functions as the "first motor"; when the speed difference is smaller than a speed difference threshold, a PI controller is enabled to increase the torque output value of the anti-sway motor b, so that the anti-sway motor b tightly stretches the hoist to prevent the hoist from swaying in the direction of the anti-sway motor a. Conversely, if the hoist sways to position W, that is, in the direction of the anti-sway motor b, then the anti-sway motor a functions as the "first motor", and the speed difference between the speed of the anti-sway motor a and the speed of the anti-sway motor b is negative; when the speed difference is smaller than a speed difference threshold, the PI controller is enabled to increase the torque output value of the anti-sway motor a, so that the anti-sway motor a tightly stretches the hoist to prevent the hoist from swaying in the direction of the anti-sway motor b.

A method according to an exemplary embodiment of the present application further comprises: acquiring a first speed difference target value, wherein increasing a torque output value of the first motor in the trolley traveling direction comprises increasing a torque output value of the first motor until a first speed difference between the first speed value and the second speed value reaches the first speed difference target value.

A method according to an exemplary embodiment of the present application further comprises: acquiring a second speed difference target value, wherein increasing a torque output value of the first motor in the cart traveling direction comprises increasing a torque output value of the first motor until a second speed difference between the first speed value and the third speed value reaches the second speed difference target value.

A method according to an exemplary embodiment of the present application further comprises: acquiring a torque high limit and a torque low limit, wherein a torque output value of the first motor is limited to not exceed the torque high limit or the torque low limit.

In an exemplary embodiment, the process of regulating the torque of a motor is implemented by using a PI controller. For example, the PI controller implements a control method that allows a speed difference between a controlled motor and a motor positioned facing the sway direction of the controlled motor to reach a speed difference target value. An advantage of a PI controller is that when there is a deviation between a given value (speed difference target value) and a feedback value (actual speed difference), it will automatically regulate the output value, and when there is no deviation, it will keep the original output value. Therefore, the method allows automatic regulation of the torque output value on the basis of the speed difference value until the speed difference reaches the speed difference target value; for example, when the speed difference target value is 0, or when a torque limit is reached, the hoist is pulled backward with the maximum torque. When the hoist is traveling or when the trolley or cart is traveling, the four anti-sway motors are all assigned appropriate torque values to ensure that the steel wire rope remains tightly stretched and can passively follow the hoist; even when the hoist is swaying, the steel wire rope may be automatically shrunk by a PI controller to limit the sway of the hoist. Thus, torque output by a motor is limited within a required range, and the amplitude of sway of the hoist in the trolley traveling direction and the amplitude of sway of the hoist in the cart traveling direction are kept within a desired range.

A method according to an exemplary embodiment of the present application further comprises: acquiring an enable instruction, the enable instruction being used to allow a control instruction to be sent to the first motor to increase a torque output value of the first motor. In addition to enabling the PI controller to start the anti-sway process when the speed difference is smaller than a speed difference threshold, it is also possible to enable the PI controller to start the anti-sway process according to, for example, a manually input instruction, thereby enabling the restriction of the sway of the hoist when needed.

A method according to an exemplary embodiment of the present application further comprises: acquiring a proportional parameter and an integral time, wherein a torque output value of the first motor is regulated on the basis of a proportional parameter and an integral time. According to an exemplary embodiment of the present application, the PI controller, on the basis of a proportional parameter and an integral time, automatically regulates a torque output value of a motor as the system state changes.

A method according to an exemplary embodiment of the present application further comprises: if a first speed difference between the first speed value and the second speed value is greater than zero, sending a control instruction to the first motor to reduce a torque output value of the first motor in the trolley traveling direction. In this case, the hoist sways toward the first motor in the trolley traveling direction; for example, the hoist may be on the same side or the opposite side of the first motor, and the torque of the first motor is reduced but is kept greater than the torque lower limit, thereby keeping the hoist tightly stretched.

A method according to an exemplary embodiment of the present application further comprises: if a second speed difference between the first speed value and the third speed value is greater than zero, sending a control instruction to the first motor to reduce a torque output value of the first motor in the cart traveling direction. In this case, the hoist sways toward the first motor in the cart traveling direction; for example, the hoist may be on the same side or the opposite side of the first motor, and the torque of the first motor is reduced but is kept greater than the torque lower limit, thereby keeping the hoist tightly stretched.

Thus, when the hoist sways toward the first motor in the trolley traveling direction or in the cart traveling direction, the torque of the first motor is reduced but is kept within a proper range of torque. Since a method according to an exemplary embodiment of the present application is applied to all the four motors that pull the four corners of the hoist, in this case, the torque of the motor on the opposite side of the first motor in the trolley or cart traveling direction is increased, so that the amplitude of sway of the hoist to the zero position is controlled.

According to another aspect of an embodiment of the present application, a device for controlling a crane is further provided. Figure 7 is a block diagram for a device for controlling a crane according to an embodiment of the present application. As shown in Figure 7, the device 10 for controlling a crane according to an embodiment of the present application comprises: a first speed acquiring unit 101, a second speed acquiring unit 103, a first speed difference acquiring unit 105, a first speed difference threshold acquiring unit 107, and a first PI controller 109.

The first speed acquiring unit 101 is configured to acquire a first speed value of a first motor, the first motor being configured to pull a first end of the hoist of a crane, wherein, when the first end of the hoist moves toward the first motor, the first speed value is positive; and when the first end of the hoist moves away from the first motor, the first speed value is negative. The second speed acquiring unit 103 is configured to acquire a second speed value of a second motor, the second motor being configured to pull a second end of the hoist of the crane, the second end being the opposite end of the first end in a trolley traveling direction of the crane, wherein, when the second end of the hoist moves towards the second motor, the second speed value is positive; and when the second end of the hoist moves away from the second motor, the second speed value is negative. The first speed difference acquiring unit 105 is configured to acquire a first speed difference between the first speed value and the second speed value. The first speed difference threshold acquiring unit 107 is configured to acquire a first speed difference threshold. The first PI controller 109 is configured to, if the first speed difference between the first speed value and the second speed value is smaller than the first speed difference threshold, send a control instruction to the first motor to increase a torque output value of the first motor in the trolley traveling direction.

Thus, when the hoist sways in a trolley traveling direction, the motor on the opposite side of the hoist sway increases the torque output, thereby controlling an amplitude of sway of the hoist in the trolley traveling direction.

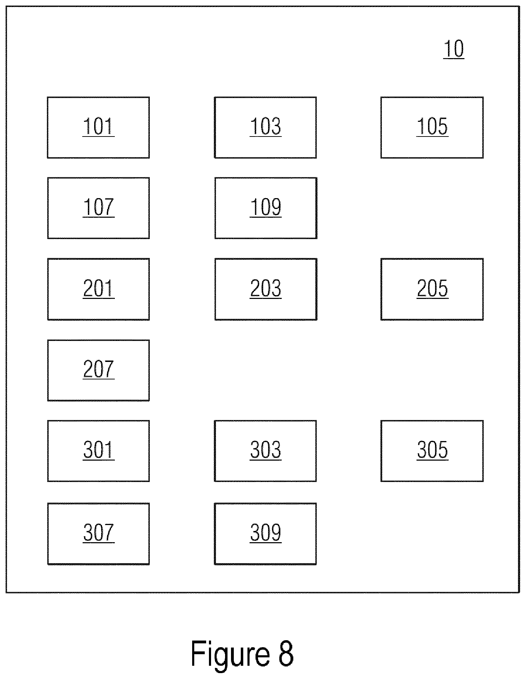

Figure 8 is a block diagram for a device for controlling a crane according to an exemplary embodiment of the present application. As shown in Figure 8, a device for controlling a crane according to an exemplary embodiment of the present application further comprises: a third speed acquiring unit 201, a second speed difference acquiring unit 203, a second speed difference threshold acquiring unit 205, and a second PI controller 207.

The third speed acquiring unit 201 is configured to acquire a third speed value of a third motor, the third motor being configured to pull a third end of the hoist of a crane, the third end being the opposite end of the first end in a cart traveling direction of the crane, wherein, when the third end of the hoist moves towards the third motor, the third speed value is positive, and when the third end of the hoist moves away from the third motor, the third speed value is negative. The second speed difference acquiring unit 203 is configured to acquire a second speed difference between the first speed value and the third speed value. The second speed difference threshold acquiring unit 205 is configured to acquire a second speed difference threshold. The second PI controller 207 is configured to, if the second speed difference between the first speed value and the third speed value is smaller than the second speed difference threshold, send a control instruction to the first motor to increase a torque output value of the first motor in the cart traveling direction.

Thus, when the hoist sways in the cart traveling direction, the motor on the opposite side of the hoist sway increases the torque output, thereby controlling the amplitude of sway of the hoist in the cart traveling direction.

As shown in Figure 8, a device for controlling a crane according to an exemplary embodiment of the present application further comprises: a first target value acquiring unit 301 configured to acquire a first speed difference target value, wherein increasing a torque output value of the first motor in the trolley traveling direction comprises increasing a torque output value of the first motor until a first speed difference between the first speed value and the second speed value reaches the first speed difference target value.

Thus, an amplitude of sway of the hoist in the trolley traveling direction is kept within a desired range.

As shown in Figure 8, a device for controlling a crane according to an exemplary embodiment of the present application further comprises: a second target value acquiring unit 303 configured to acquire a second speed difference target value, wherein increasing a torque output value of the first motor in the cart traveling direction comprises increasing a torque output value of the first motor until a second speed difference between the first speed value and the third speed value reaches the second speed difference target value.

Thus, an amplitude of sway of the hoist in the cart traveling direction is kept within a desired range.

As shown in Figure 8, a device for controlling a crane according to an exemplary embodiment of the present application further comprises: an enable instruction acquiring unit 305 configured to acquire an enable instruction, the enable instruction being used to allow a control instruction to be sent to the first motor to increase a torque output value of the first motor.

Thus, it is possible to allow the control of an amplitude of sway of a hoist when an amplitude of sway of the hoist needs to be controlled.

As shown in Figure 8, a device for controlling a crane according to an exemplary embodiment of the present application further comprises: a limit value acquiring unit 307 configured to acquire a torque high limit and a torque low limit, wherein a torque output value of the first motor is limited to not exceed the torque high limit or the torque low limit.

Thus, torque output by a motor is limited to a required range.

As shown in Figure 8, a device for controlling a crane according to an exemplary embodiment of the present application further comprises: a regulation parameter acquiring unit 309 configured to acquire a proportional parameter and an integral time, wherein a torque output value of the first motor is regulated on the basis of a proportional parameter and an integral time.

Thus, a torque output value of a motor is automatically regulatable as the state of the system changes.

A device for controlling a crane according to an embodiment of the present application implements a method for controlling a crane according to the embodiment of the present application as described above, and no similar descriptions will be given again herein.

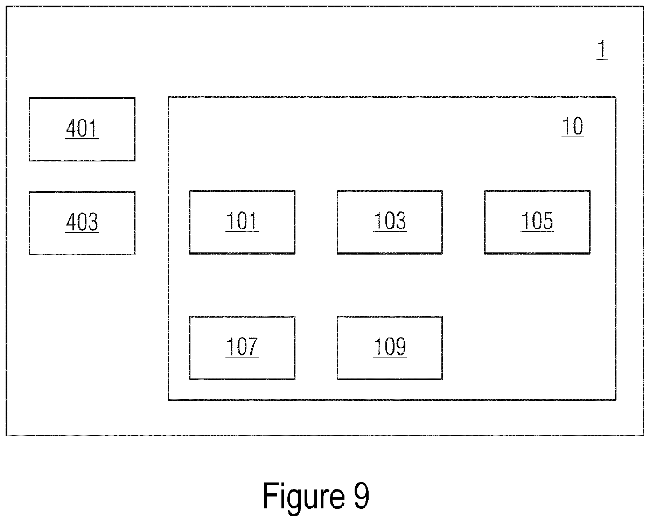

According to another aspect of an embodiment of the present application, a system for controlling a crane is further provided. Figure 9 is a block diagram for a system for controlling a crane according to an embodiment of the present application. As shown in Figure 9, the system 1 for controlling a crane according to an embodiment of the present application comprises: a first motor 401, a second motor 403, and a device 10 for controlling a crane.

The first motor 401 is configured to pull a first end of the hoist of the crane. The second motor 403 is configured to pull a second end of the hoist of the crane, the second end being the opposite end of the first end in a trolley traveling direction of the crane. The first speed acquiring unit 101 of the device 10 for controlling a crane is configured to acquire a first speed value of the first motor 401, wherein, when the first end of the hoist moves toward the first motor 401, the first speed value is positive; and when the first end of the hoist moves away from the first motor 401, the first speed value is negative. The second speed acquiring unit 103 of the device 10 for controlling a crane is configured to acquire a second speed value of the second motor 403, wherein, when the second end of the hoist moves towards the second motor 403, the second speed value is positive; and when the second end of the hoist moves away from the second motor 403, the second speed value is negative. The first speed difference acquiring unit 105 of the device 10 for controlling a crane is configured to acquire a first speed difference between the first speed value and the second speed value. The first speed difference threshold acquiring unit 107 of the device 10 for controlling a crane is configured to acquire a first speed difference threshold. The first PI controller 109 of the device 10 for controlling a crane is configured to, if the first speed difference between the first speed value and the second speed value is smaller than the first speed difference threshold, send a control instruction to the first motor 401 to increase a torque output value of the first motor 401 in the trolley traveling direction.

It should be understood that the first motor 401 may be any one of the four anti-sway motors that pull the four ends of the hoist. When the hoist sways in a certain direction, the motor on the opposite side of the sway direction is the "first motor" according to an embodiment of the present application.

Thus, when the hoist sways in a trolley traveling direction, the motor on the opposite side of the hoist sway increases the torque output, thereby controlling an amplitude of sway of the hoist in the trolley traveling direction.

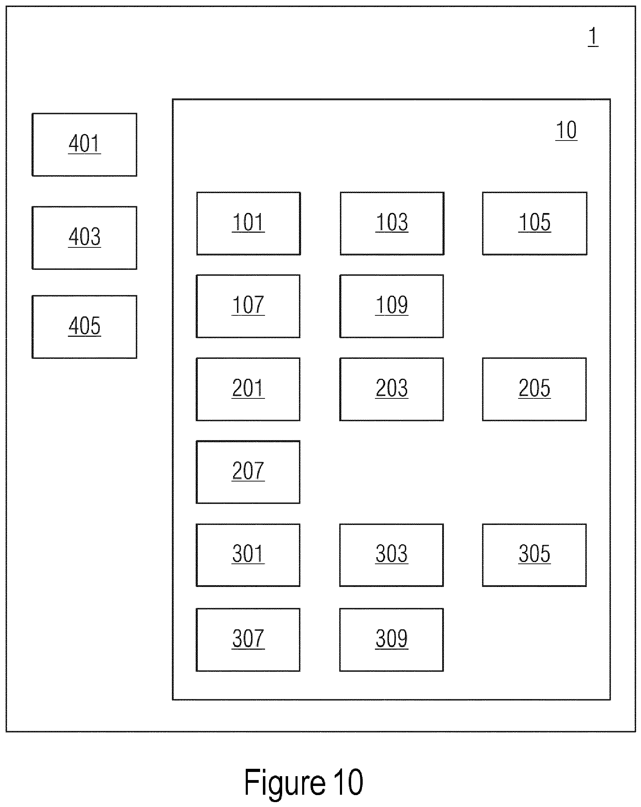

Figure 10 is a block diagram for a system for controlling a crane according to an exemplary embodiment of the present application. As shown in Figure 10, the system 1 for controlling a crane according to an exemplary embodiment of the present application comprises: a third motor 405 and the device 10 for controlling a crane according to an exemplary embodiment of the present application.

The third motor 405 is configured to pull a third end of the hoist of a crane, the third end being the opposite end of the first end in a cart traveling direction of the crane. The third speed acquiring unit 201 of the device 10 for controlling a crane according to an exemplary embodiment of the present application is configured to acquire a third speed value of the third motor 405, wherein, when the third end of the hoist moves towards the third motor 405, the third speed value is positive, and when the third end of the hoist moves away from the third motor 405, the third speed value is negative. The second speed difference acquiring unit 203 of the device 10 for controlling a crane according to an exemplary embodiment of the present application is configured to acquire a second speed difference between the first speed value and the third speed value. The second speed difference threshold acquiring unit 205 of the device 10 for controlling a crane according to an exemplary embodiment of the present application is configured to acquire a second speed difference threshold. The second PI controller 207 of the device 10 for controlling a crane according to an exemplary embodiment of the present application is configured to, if the second speed difference between the first speed value and the third speed value is smaller than the second speed difference threshold, send a control instruction to the first motor 401 to increase a torque output value of the first motor in the cart traveling direction.

It should be understood that the first motor 401 may be any one of the four anti-sway motors that pull the four ends of the hoist. When the hoist sways in a certain direction, the motor on the opposite side of the sway direction is the "first motor" according to an embodiment of the present application.

Thus, when the hoist sways in the cart traveling direction, the motor on the opposite side of the hoist sway increases the torque output, thereby controlling the amplitude of sway of the hoist in the cart traveling direction.

The system for controlling a crane according to an embodiment of the present application comprises a device for controlling a crane that implements a method for controlling a crane according to the embodiment of the present application as described above, and no similar descriptions will be given again herein.

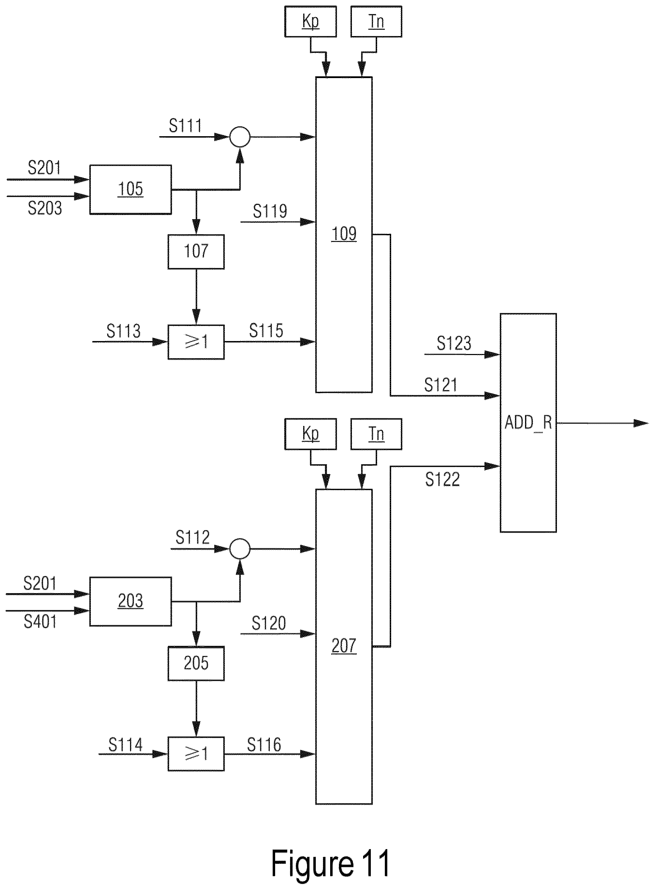

Figure 11 is a schematic diagram for a method for preventing sway in a system for controlling a crane according to an exemplary embodiment of the present application. As shown in Figure 11, for the anti-sway process in the trolley traveling direction, a first speed value of the first motor is obtained in S201, a second speed value of the second motor is obtained in S203, and a first speed difference between the first speed value and the second speed value is obtained by the first speed difference acquiring unit 105. In S111, a first speed difference target value, for example, 0.0, is acquired. The first speed difference threshold acquiring unit 107 acquires a first speed difference threshold. The first speed difference between the first speed value and the second speed value is compared with the first speed difference threshold; if the first speed difference is smaller than the first speed difference threshold, then the first PI controller 109 is enabled in S115 to increase the torque output value of the first motor in the trolley traveling direction. In an exemplary embodiment, if the first speed difference is greater than 0.0, the first PI controller 109 is not enabled. In an exemplary embodiment, an enable instruction may be input by a PLC in S113 so that the first PI controller 109 is enabled in S115. A torque high limit and a torque low limit are set in S119. The first PI controller 109 automatically regulates the output torque on the basis of an input proportional parameter Kp and an integral parameter Tn, and outputs it to the first motor in S121, so as to prevent the hoist from swaying in the trolley traveling direction. In addition, in S123, the motor is controlled by a PLC to tightly stretch the rope of the hoist.

As shown in Figure 11, for the anti-sway process in the cart traveling direction, a first speed value of the first motor is acquired in S201, a third speed value of the third motor is acquired in S401, and a second speed difference between the first speed value and the third speed value is acquired by the second speed difference acquiring unit 203. In S112, a second speed difference target value, for example 0.0, is acquired. The second speed difference threshold acquiring unit 205 acquires a second speed difference threshold. The second speed difference between the first speed value and the third speed value is compared with the second speed difference threshold; if the second speed difference is smaller than the second speed difference threshold, the second PI controller 207 is enabled in S116 to increase the torque output value of the first motor in the cart traveling direction. In an exemplary embodiment, if the second speed difference is greater than 0.0, the second PI controller 207 is not enabled. In an exemplary embodiment, an enable instruction may be input by a PLC in S114 so that the second PI controller 207 is enabled in S116. A torque high limit and a torque low limit are set in S120. The second PI controller 207 automatically regulates the output torque on the basis of the input proportional parameter Kp and integral parameter Tn, and outputs it to the first motor in S122 to prevent the hoist from swaying in the cart traveling direction. After ADD_R, the sway of the hoist is finally prevented.

In an exemplary embodiment, as shown in Figure 11, the given value of the first PI controller 109 and the second PI controller 207 is 0.0, and the feedback value thereof is the speed difference between the controlled motor and a motor positioned facing the sway direction of the controlled motor. The direction in which an anti-sway motor takes up the steel wire rope, that is, the lifting direction of the hoist, is defined as the positive direction of the speed, and the reverse direction is defined as the negative direction of the speed. When the speed difference is smaller than a speed difference threshold (for example, it may be set to -3.0, which may be appropriately changed on the basis of an error in the speeds of the two motors when only the hoist is lifted), the first PI controller 109 and the second PI controller 207 are enabled; the first PI controller 109 and the second PI controller 207 will automatically regulate the output torque on the basis of the proportional parameter Kp and the integral parameter Tn. In addition, when the speed difference is greater than a set value (which may be set to 0.0), that is, when the sway direction is reversed, the PI controller is disabled so that its output torque is 0. In an exemplary scenario, when the trolley is accelerating or decelerating, the hoist maintains a certain angle (in a position having the maximum sway, when the speed difference is about 0) to achieve a matching acceleration; in this case, the first PI controller 109 may be enabled by a PLC; for example, an enable instruction is input in S113, and the first PI controller 109 is enabled in S115 so that the anti-sway function of the first PI controller 109 remains effective. A torque high limit and a torque low limit are set in S119 and S120. Since the steel wire rope by which an anti-sway motor pulls the hoist needs to be kept tightly stretched all the time, it is recommended that the set output torque of a PI controller be not smaller than 0; therefore, the torque low limit of the first PI controller 109 and of the second PI controller 207 is set to 0.0. Depending on whether the trolley and the cart operate separately or in conjunction, the torque high limit of the first PI controller 109 and of the second PI controller 207 in the trolley direction and the cart direction is set to 50 - 100, which is controlled by PLC output.

See Figure 6 and Figure 11; taking, as an example, the anti-sway motor a and the anti-sway motor b that is positioned opposite to the sway direction of the hoist when the cart is traveling, when the cart accelerates, the hoist sways from position V to position W; in this case, the speed of the anti-sway motor a is smaller than 0, and the speed of the anti-sway motor b is greater than 0; therefore, the speed difference between the anti-sway motor a and the anti-sway motor b is negative, and the second PI controller 207 outputs a matching torque output value to the anti-sway motor a to reduce the amplitude of sway. The speed difference between the anti-sway motor b and the anti-sway motor a is positive, and the torque output by the second PI controller 207 to the anti-sway motor b is 0; even if the second PI controller 207 keeps being enabled by a PLC, when the speed difference turns positive, the torque output of the second PI controller 207 quickly decreases until it reaches the torque low limit = 0.0. Likewise, when the cart has just started traveling at a constant speed after acceleration, the hoist sways from position W to position V; at this point, the speed of the anti-sway motor b is smaller than 0, and the speed of the anti-sway motor a is greater than 0. Therefore, the speed difference between the anti-sway motor b and the anti-sway motor a is negative, and the second PI controller 207 outputs a matching torque output value to the anti-sway motor b, so that the hoist slowly sways back to the base point. The speed difference between the anti-sway motor a and the anti-sway motor b is positive, and the output torque of the second PI controller 207 to the anti-sway motor a is 0; even if the second PI controller 207 keeps being enabled by a PLC, when the speed difference turns positive, the torque output of the second PI controller 207 quickly decreases until it reaches the torque low limit = 0.0. Therefore, although the four anti-sway motors run the same control program, when the hoist is in different sway positions, respective controlled torques of the four motors can fully adapt to the torque required by each sway position.

According to another aspect of an embodiment of the present application, a storage medium is further provided, the storage medium comprising a stored program that when run, controls a device where the storage medium is located to implement a method according to an embodiment of the present application.

According to another aspect of an embodiment of the present application, a processor is further provided, the processor being configured to run a program that, when executed, implements a method according to an embodiment of the present application.

According to another aspect of an embodiment of the present application, a terminal is further provided, comprising: one or more processors, a memory, and one or more programs, wherein said one or more programs are stored in the memory and configured to be executed by said one or more processors, said one or more programs comprising a method for implementing a method according to an embodiment of the present application.

According to another aspect of an embodiment of the present application, a computer program product is further provided, the computer program product being tangibly stored on a computer-readable medium and comprising a computer-executable instruction that, when executed, causes at least one processor to implement a method according to an embodiment of the present application.

Thus, when the hoist sways, the motor on the opposite side of the hoist sway increases the torque output, thereby controlling an amplitude of sway of the hoist.

With an anti-sway system according to an embodiment of the present application, debugging is simple, few parameters need to be changed or adjusted, and a good control effect is still produced even when default parameters are used; this allows saving of considerable debugging time to improve the debugging efficiency.

With an anti-sway system according to an embodiment of the present application, the anti-sway effect remains unaffected when various mechanisms of the hoist, the trolley, and the cart are operated in conjunction.

An anti-sway system according to an embodiment of the present application is effective in preventing sway caused by external disturbance.

A set torque value of an anti-sway system according to an embodiment of the present application is automatically regulated by the output of a PI controller, without the need to consider the load on the hoist.

Since a speed difference is used as the controlled quantity, the controlled quantity remains little affected regardless of whether the lifting mechanism is operated while the trolley or cart is traveling. Therefore, the controlled quantity can accurately reflect a sway situation without being affected by the simultaneous operation of the lifting mechanism, which ensures that the anti-sway effect remains unaffected. Since the steel wire rope remains tightly stretched under the control of a motor, a speed difference arises once sway occurs, and thus sway caused by external disturbance may be prevented effectively. Like speed closed-loop control, due to a deviation between a set value and a feedback value, a PI controller automatically regulates the output torque until the deviation between the set value and the feedback value becomes 0; thus, the torque may be regulated very appropriately without considering the magnitude of the hoist load.

In each of the above-described embodiments of the present application, particular emphasis is put on a respective aspect; for a part not detailed in an embodiment, reference may be made to relevant descriptions in other embodiments.

It should be understood that the technical contents disclosed in the embodiments provided by the present application may be implemented by other methods. The above-described device embodiment is only illustrative. For example, the division of said units or modules is only logical function division, and an alternative division method may be employed in actual implementation. For example, a plurality of units or modules may be combined or integrated into another system, or certain characteristics may be ignored or not be executed. In addition, the shown or discussed mutual coupling or direct coupling or communication connection may be established via certain interfaces, and indirect coupling or communication connection between modules or units may be electrical or in any other form.

Said units or modules described as separate components may or may not be physically separated. Components shown as units or modules may or may not be physical units or modules; in other words, they may be located in the same place or may be distributed on a plurality of network units or modules. An objective of the technical solution of an embodiment may be achieved by selecting some or all of the units or modules based on actual needs.

Further, the functional units or modules in each embodiment of the present application may be integrated in one processing unit or module, or each of the functional units or modules may exist physically and separately, or two or more units or modules may be integrated in one unit or module. Said integrated unit or module may be implemented in the form of hardware or may be implemented in the form of a software functional unit or module.

To be implemented in the form of a software functional unit and sold or used as a standalone product, said integrated unit may be stored in a computer-readable storage medium. Based on such an understanding, the technical solution of the present application essentially, or for a part contributing to the prior art, or for all or part of the technical solution, may be embodied in the form of a software product. The computer software product is stored in a storage medium, comprising a plurality of instructions for causing a computer device (a personal computer, server, network device, etc.) to execute all or part of the steps of the method described in each embodiment of the present application. Examples of the above-described storage medium include USB drive, Read-Only Memory (ROM), Random Access Memory (RAM), movable hard disk, magnetic disk, CD-ROM, or any other medium that can store program code.

While the present invention has been particularly described above with reference to preferred embodiments, it should be understood that those of ordinary skill in the art can make various modifications as long as they fall within the scope of the appended claims.

## Claims

1. A method for controlling a crane, **characterized by** comprising:
acquiring a first speed value of a first motor (S201), the first motor being configured to pull a first end of the hoist of the crane, wherein, when the first end of the hoist moves toward the first motor, the first speed value is positive, and when the first end of the hoist moves away from the first motor, the first speed value is negative;
acquiring a second speed value of the second motor (S203), the second motor being configured to pull a second end of the hoist of the crane, the second end being the opposite end of the first end in a trolley traveling direction of the crane, wherein, when the second end of the hoist moves toward the second motor, the second speed value is positive, and when the second end of the hoist moves away from the second motor, the second speed value is negative;
acquiring a first speed difference between the first speed value and the second speed value (S205);
acquiring a first speed difference threshold (S207); and
if the first speed difference between the first speed value and the second speed value is smaller than the first speed difference threshold, sending a control instruction to the first motor to increase a torque output value of the first motor in the trolley traveling direction (S209).

2. The method as claimed in claim 1, **characterized by** further comprising:
acquiring a third speed value of a third motor (S401), the third motor being configured to pull a third end of the hoist of the crane, the third end being the opposite end of the first end in a cart traveling direction of the crane, wherein, when the third end of the hoist moves toward the third motor, the third speed value is positive, and when the third end of the hoist moves away from the third motor, the third speed value is negative;
acquiring a second speed difference between the first speed value and the third speed value (S403);
acquiring a second speed difference threshold (S405); and
if the second speed difference between the first speed value and the third speed value is smaller than the second speed difference threshold, sending a control instruction to the first motor to increase a torque output value of the first motor in the cart traveling direction (S407).

3. The method as claimed in claim 1, **characterized by** further comprising:
acquiring a first speed difference target value, wherein
increasing a torque output value of the first motor in the trolley traveling direction comprises increasing a torque output value of the first motor until a first speed difference between the first speed value and the second speed value reaches the first speed difference target value.

4. The method as claimed in claim 2, **characterized by** further comprising:
acquiring a second speed difference target value, wherein
increasing a torque output value of the first motor in the cart traveling direction comprises increasing a torque output value of the first motor until a second speed difference between the first speed value and the third speed value reaches the second speed difference target value.

5. The method as claimed in claim 1 or 2, **characterized by** further comprising:
acquiring an enable instruction, the enable instruction being used to allow a control instruction to be sent to the first motor to increase a torque output value of the first motor; or
acquiring a torque high limit and a torque low limit, wherein a torque output value of the first motor is limited to not exceed the torque high limit or the torque low limit;
acquiring a proportional parameter and an integral time, wherein a torque output value of the first motor is regulated on the basis of the proportional parameter and the integral time.

6. The method as claimed in claim 5, **characterized by** further comprising:
if the first speed difference between the first speed value and the second speed value is greater than zero, sending a control instruction to the first motor to reduce a torque output value of the first motor in the trolley traveling direction; or
if the second speed difference between the first speed value and the third speed value is greater than zero, sending a control instruction to the first motor to reduce a torque output value of the first motor in the cart traveling direction.

7. A device for controlling a crane, comprising:
a first speed acquiring unit (101) configured to acquire a first speed value of a first motor, the first motor being configured to pull a first end of the hoist of the crane, wherein, when the first end of the hoist moves toward the first motor, the first speed value is positive, and when the first end of the hoist moves away from the first motor, the first speed value is negative;
a second speed acquiring unit (103) configured to acquire a second speed value of a second motor, the second motor being configured to pull a second end of the hoist of the crane, the second end being the opposite end of the first end in a trolley traveling direction of the crane, wherein, when the second end of the hoist moves toward the second motor, the second speed value is positive, and when the second end of the hoist moves away from the second motor, the second speed value is negative;
**characterized by** further comprising:
a first speed difference acquiring unit (105) configured to acquire a first speed difference between the first speed value and the second speed value;
a first speed difference threshold acquiring unit (107) configured to acquire a first speed difference threshold; and
a first PI controller (109) configured to, if the first speed difference between the first speed value and the second speed value is smaller than the first speed difference threshold, send a control instruction to the first motor to increase a torque output value of the first motor in the trolley traveling direction.

8. The device as claimed in claim 7, **characterized by** further comprising:
a third speed acquiring unit (201) configured to acquire a third speed value of a third motor, the third motor being configured to pull a third end of the hoist of the crane, the third end being the opposite end of the first end in a cart traveling direction of the crane, wherein, when the third end of the hoist moves toward the third motor, the third speed value is positive, and when the third end of the hoist moves away from the third motor, the third speed value is negative;
a second speed difference acquiring unit (203) configured to acquire a second speed difference between the first speed value and the third speed value;
a second speed difference threshold acquiring unit (205) configured to acquire a second speed difference threshold; and
a second PI controller (207) configured to, if the second speed difference between the first speed value and the third speed value is smaller than the second speed difference threshold, send a control instruction to the first motor to increase a torque output value of the first motor in the cart traveling direction.

9. The device as claimed in claim 7, **characterized by** further comprising:
a first target value acquiring unit (301) configured to acquire a first speed difference target value, wherein
increasing a torque output value of the first motor in the trolley traveling direction comprises increasing a torque output value of the first motor until a first speed difference between the first speed value and the second speed value reaches the first speed difference target value.

10. The device as claimed in claim 8, **characterized by** further comprising:
a second target value acquiring unit (303) configured to acquire a second speed difference target value, wherein
increasing a torque output value of the first motor in the cart traveling direction comprises increasing a torque output value of the first motor until a second speed difference between the first speed value and the third speed value reaches the second speed difference target value.

11. The device as claimed in claim 7 or 8, **characterized by** further comprising:
an enable instruction acquiring unit (305) configured to acquire an enable instruction, the enable instruction being used to allow a control instruction to be sent to the first motor to increase a torque output value of the first motor; or
a limit value acquiring unit (307) configured to acquire a torque high limit and a torque low limit, wherein a torque output value of the first motor is limited to not exceed the torque high limit or the torque low limit; or
a regulation parameter acquiring unit (309) configured to acquire a proportional parameter and an integral time, wherein a torque output value of the first motor is regulated on the basis of the proportional parameter and the integral time.

12. A system for controlling a crane, comprising:
a first motor (401) configured to pull a first end of the hoist of a crane;
a second motor (403) configured to pull a second end of the hoist of the crane, the second end being the opposite end of the first end in a trolley traveling direction of the crane;
a device (10) for controlling a crane, comprising:
a first speed acquiring unit (101) configured to acquire a first speed value of the first motor (401), wherein, when the first end of the hoist moves toward the first motor (401), the first speed value is positive, and when the first end of the hoist moves away from the first motor (401), the first speed value is negative;
a second speed acquiring unit (103) configured to acquire a second speed value of the second motor (403), wherein, when the second end of the hoist moves toward the second motor (403), the second speed value is positive, and when the second end of the hoist moves away from the second motor (403), the second speed value is negative;
**characterized by** further comprising:
a first speed difference acquiring unit (105) configured to acquire a first speed difference between the first speed value and the second speed value;
a first speed difference threshold acquiring unit (107) configured to acquire a first speed difference threshold; and
a first PI controller (109) configured to, if the first speed difference between the first speed value and the second speed value is smaller than the first speed difference threshold, send a control instruction to the first motor to increase a torque output value of the first motor (401) in the trolley traveling direction.

13. The system as claimed in claim 12, **characterized by** further comprising:
a third motor (405) configured to pull a third end of the hoist of a crane, the third end being the opposite end of the first end in a cart traveling direction of the crane;
the device (10) further comprises:
a third speed acquiring unit (201) configured to acquire a third speed value of the third motor (405), wherein, when the third end of the hoist moves toward the third motor (405), the third speed value is positive, and when the third end of the hoist moves away from the third motor (405), the third speed value is negative;
a second speed difference acquiring unit (203) configured to acquire a second speed difference between the first speed value and the third speed value;
a second speed difference threshold acquiring unit (205) configured to acquire a second speed difference threshold; and
a second PI controller (207) configured to, if the second speed difference between the first speed value and the third speed value is smaller than the second speed difference threshold, send a control instruction to the first motor to increase a torque output value of the first motor (401) in the cart traveling direction.

14. A storage medium, **characterized by** comprising a stored program that, when run, controls the device, as claimed in any one of claims 7-11, where the storage medium is located to implement the method as claimed in any one of claims 1 to 6.

15. A computer program product, **characterized by** being tangibly stored on a computer-readable medium and comprising a computer-executable instruction that, when executed, causes at least one processor of the device, as claimed in any one of claims 7-11, to implement the method as claimed in any one of claims 1 to 6.

## Patentansprüche

1. Verfahren zum Steuern eines Krans, **dadurch gekennzeichnet, dass** es Folgendes umfasst:
Erfassen eines ersten Drehzahlwertes eines ersten Motors (S201), wobei der erste Motor dazu ausgelegt ist, ein erstes Ende des Hebezeugs des Krans zu ziehen, wobei, wenn sich das erste Ende des Hebezeugs zum ersten Motor bewegt, der erste Drehzahlwert positiv ist, und wenn sich das erste Ende des Hebezeugs vom ersten Motor weg bewegt, der erste Drehzahlwert negativ ist;
Erfassen eines zweiten Drehzahlwertes des zweiten Motors (S203), wobei der zweite Motor dazu ausgelegt ist, ein zweites Ende des Hebezeugs des Krans zu ziehen, wobei das zweite Ende in einer Katzenfahrtrichtung das gegenüberliegende Ende des ersten Endes des Krans ist, wobei, wenn sich das zweite Ende des Hebezeugs zum zweiten Motor bewegt, der zweite Drehzahlwert positiv ist, und wenn sich das zweite Ende des Hebezeugs vom zweiten Motor weg bewegt, der zweite Drehzahlwert negativ ist;
Erfassen einer ersten Drehzahldifferenz zwischen dem ersten Drehzahlwert und dem zweiten Drehzahlwert (S205);
Erfassen eines ersten Drehzahldifferenzschwellwertes (S207) und wenn die erste Drehzahldifferenz zwischen dem ersten Drehzahlwert und dem zweiten Drehzahlwert kleiner ist als der erste Drehzahldifferenzschwellwert, Senden einer Steueranweisung an den ersten Motor zum Erhöhen eines Drehmomentausgabewertes des ersten Motors in der Katzenfahrtrichtung (S209).

2. Verfahren nach Anspruch 1, **dadurch gekennzeichnet, dass** es ferner Folgendes umfasst:
Erfassen eines dritten Drehzahlwertes eines dritten Motors (S401), wobei der dritte Motor dazu ausgelegt ist, ein drittes Ende des Hebezeugs des Krans zu ziehen, wobei das dritte Ende in einer Wagenfahrtrichtung das gegenüberliegende Ende des ersten Endes des Krans ist, wobei, wenn sich das dritte Ende des Hebezeugs zum dritten Motor bewegt, der dritte Drehzahlwert positiv ist, und wenn sich das dritte Ende des Hebezeugs vom dritten Motor weg bewegt, der dritte Drehzahlwert negativ ist;
Erfassen einer zweiten Drehzahldifferenz zwischen dem ersten Drehzahlwert und dem dritten Drehzahlwert (S403);
Erfassen eines zweiten Drehzahldifferenzschwellwertes (S405) und
wenn die zweite Drehzahldifferenz zwischen dem ersten Drehzahlwert und dem dritten Drehzahlwert kleiner ist als der zweite Drehzahldifferenzschwellwert, Senden einer Steueranweisung an den ersten Motor zum Erhöhen eines Drehmomentausgabewertes des ersten Motors in der Wagenfahrtrichtung (S407).

3. Verfahren nach Anspruch 1, **dadurch gekennzeichnet, dass** es ferner Folgendes umfasst:
Erfassen eines ersten Drehzahldifferenzsollwertes, wobei
das Erhöhen eines Drehmomentausgabewertes des ersten Motors in der Katzenfahrtrichtung das Erhöhen eines Drehmomentausgabewertes des ersten Motors umfasst, bis eine erste Drehzahldifferenz zwischen dem ersten Drehzahlwert und dem zweiten Drehzahlwert den ersten Drehzahldifferenzsollwert erreicht.

4. Verfahren nach Anspruch 2, **dadurch gekennzeichnet, dass** es ferner Folgendes umfasst:
Erfassen eines zweiten Drehzahldifferenzsollwertes und
das Erhöhen eines Drehmomentausgabewertes des ersten Motors in der Wagenfahrtrichtung umfasst das Erhöhen eines Drehmomentausgabewertes des ersten Motors, bis eine zweite Drehzahldifferenz zwischen dem ersten Drehzahlwert und dem dritten Drehzahlwert den zweiten Drehzahldifferenzsollwert erreicht.

5. Verfahren nach Anspruch 1 oder 2, **dadurch gekennzeichnet, dass** es ferner Folgendes umfasst:
Erfassen einer Ermöglichungsanweisung, wobei die Ermöglichungsanweisung verwendet wird, um es zu erlauben, dass eine Steueranweisung an den ersten Motor zum Erhöhen eines Drehmomentausgabewertes des ersten Motors gesendet wird; oder
Erfassen eines hohen Drehmomentgrenzwerts und eines niedrigen Drehmomentgrenzwerts, wobei ein Drehmomentausgabewert des ersten Motors darauf begrenzt ist, den hohen Drehmomentgrenzwert oder den niedrigen Drehmomentgrenzwert nicht zu überschreiten;
Erfassen eines proportionalen Parameters und einer integralen Zeit, wobei der Drehmomentausgabewert des ersten Motors auf Basis des proportionalen Parameters und der integralen Zeit geregelt wird.

6. Verfahren nach Anspruch 5, **dadurch gekennzeichnet, dass** es ferner Folgendes umfasst:
wenn die erste Drehzahldifferenz zwischen dem ersten Drehzahlwert und dem zweiten Drehzahlwert größer ist als null, Senden einer Steueranweisung an den ersten Motor zum Verringern eines Drehmomentausgabewertes des ersten Motors in der Katzenfahrtrichtung oder
wenn die zweite Drehzahldifferenz zwischen dem ersten Drehzahlwert und dem dritten Drehzahlwert größer ist als null, Senden einer Steueranweisung an den ersten Motor zum Verringern eines Drehmomentausgabewertes des ersten Motors in der Wagenfahrtrichtung.

7. Vorrichtung zum Steuern eines Krans, die Folgendes umfasst:
eine erste Drehzahlerfassungseinheit (101), die dazu ausgelegt ist, einen ersten Drehzahlwert eines ersten Motors zu erfassen, wobei der erste Motor dazu ausgelegt ist, ein erstes Ende des Hebezeugs des Krans zu ziehen, wobei, wenn sich das erste Ende des Hebezeugs zum ersten Motor bewegt, der erste Drehzahlwert positiv ist, und wenn sich das erste Ende des Hebezeugs vom ersten Motor weg bewegt, der erste Drehzahlwert negativ ist;
eine zweite Drehzahlerfassungseinheit (103), die dazu ausgelegt ist, einen zweiten Drehzahlwert des zweiten Motors zu erfassen, wobei der zweite Motor dazu ausgelegt ist, ein zweites Ende des Hebezeugs des Krans zu ziehen, wobei das zweite Ende in einer Katzenfahrtrichtung das gegenüberliegende Ende des ersten Endes des Krans ist, wobei, wenn sich das zweite Ende des Hebezeugs zum zweiten Motor bewegt, der zweite Drehzahlwert positiv ist, und wenn sich das zweite Ende des Hebezeugs vom zweiten Motor weg bewegt, der zweite Drehzahlwert negativ ist;
**dadurch gekennzeichnet, dass** sie ferner Folgendes umfasst:
eine erste Drehzahldifferenzerfassungseinheit (105), die dazu ausgelegt ist, eine erste Drehzahldifferenz zwischen dem ersten Drehzahlwert und dem zweiten Drehzahlwert zu erfassen;
eine erste Drehzahldifferenzschwellwerterfassungseinheit (107), die dazu ausgelegt ist, einen ersten Drehzahldifferenzschwellwert zu erfassen; und
eine erste PI-Steuerung (109), die dazu ausgelegt ist, wenn die erste Drehzahldifferenz zwischen dem ersten Drehzahlwert und dem zweiten Drehzahlwert kleiner ist als der erste Drehzahldifferenzschwellwert, eine Steueranweisung an den ersten Motor zum Erhöhen eines Drehmomentausgabewertes des ersten Motors in der Katzenfahrtrichtung zu senden.

8. Vorrichtung nach Anspruch 7, **dadurch gekennzeichnet, dass** sie ferner Folgendes umfasst:
eine dritte Drehzahlerfassungseinheit (201), die dazu ausgelegt ist, einen dritten Drehzahlwert eines dritten Motors zu erfassen, wobei der dritte Motor dazu ausgelegt ist, ein drittes Ende des Hebezeugs des Krans zu ziehen, wobei das dritte Ende in einer Wagenfahrtrichtung das gegenüberliegende Ende des ersten Endes des Krans ist, wobei, wenn sich das dritte Ende des Hebezeugs zum dritten Motor bewegt, der dritte Drehzahlwert positiv ist, und wenn sich das dritte Ende des Hebezeugs vom dritten Motor weg bewegt, der dritte Drehzahlwert negativ ist;
eine zweite Drehzahldifferenzerfassungseinheit (203), die dazu ausgelegt ist, eine zweite Drehzahldifferenz zwischen dem ersten Drehzahlwert und dem dritten Drehzahlwert zu erfassen;
eine zweite Drehzahldifferenzschwellwerterfassungseinheit (205), die dazu ausgelegt ist, einen zweiten Drehzahldifferenzschwellwert zu erfassen; und
eine zweite PI-Steuerung (207), die dazu ausgelegt ist, wenn die zweite Drehzahldifferenz zwischen dem ersten Drehzahlwert und dem dritten Drehzahlwert kleiner ist als der zweite Drehzahldifferenzschwellwert, eine Steueranweisung an den ersten Motor zum Erhöhen eines Drehmomentausgabewertes des ersten Motors in der Wagenfahrtrichtung zu senden.

9. Vorrichtung nach Anspruch 7, **dadurch gekennzeichnet, dass** sie ferner Folgendes umfasst:
eine erste Sollwerterfassungseinheit (301), die dazu ausgelegt ist, einen ersten Drehzahldifferenzsollwert zu erfassen, wobei das Erhöhen eines Drehmomentausgabewertes des ersten Motors in der Katzenfahrtrichtung das Erhöhen eines Drehmomentausgabewertes des ersten Motors umfasst, bis eine erste Drehzahldifferenz zwischen dem ersten Drehzahlwert und dem zweiten Drehzahlwert den ersten Drehzahldifferenzsollwert erreicht.

10. Vorrichtung nach Anspruch 8, **dadurch gekennzeichnet, dass** sie ferner Folgendes umfasst:
eine zweite Sollwerterfassungseinheit (303), die dazu ausgelegt ist, einen zweiten Drehzahldifferenzsollwert zu erfassen, wobei das Erhöhen eines Drehmomentausgabewertes des ersten Motors in der Wagenfahrtrichtung das Erhöhen eines Drehmomentausgabewertes des ersten Motors umfasst, bis eine zweite Drehzahldifferenz zwischen dem ersten Drehzahlwert und dem dritten Drehzahlwert den zweiten Drehzahldifferenzsollwert erreicht.

11. Vorrichtung nach Anspruch 7 oder 8, **dadurch gekennzeichnet, dass** sie ferner Folgendes umfasst:
eine Ermöglichungsanweisungserfassungseinheit (305), die dazu ausgelegt ist, eine Ermöglichungsanweisung zu erfassen, wobei die Ermöglichungsanweisung verwendet wird, um es zu erlauben, dass eine Steueranweisung an den ersten Motor zum Erhöhen eines Drehmomentausgabewertes des ersten Motors gesendet wird; oder
eine Grenzwerterfassungseinheit (307), die dazu ausgelegt ist, einen hohen Drehmomentgrenzwert und eines niedrigen Drehmomentgrenzwert zu erfassen, wobei ein Drehmomentausgabewert des ersten Motors darauf begrenzt ist, den hohen Drehmomentgrenzwert oder den niedrigen Drehmomentgrenzwert nicht zu überschreiten; oder
eine Regulierungsparametererfassungseinheit (309), die dazu ausgelegt ist, einen proportionalen Parameter und eine integrale Zeit zu erfassen, wobei der Drehmomentausgabewert des ersten Motors auf Basis des proportionalen Parameters und der integralen Zeit geregelt wird.

12. System zum Steuern eines Krans, das Folgendes umfasst:
einen ersten Motor (401), der dazu ausgelegt ist, ein erstes Ende des Hebezeugs eines Krans zu ziehen;
einen zweiten Motor (403), der dazu ausgelegt ist, ein zweites Ende des Hebezeugs des Krans zu ziehen, wobei das zweite Ende in einer Katzenfahrtrichtung das gegenüberliegende Ende des ersten Endes des Krans ist;
eine Vorrichtung (10) zum Steuern eines Krans, die Folgendes umfasst:
eine erste Drehzahlerfassungseinheit (101), die dazu ausgelegt ist, einen ersten Drehzahlwert des ersten Motors (401) zu erfassen, wobei, wenn sich das erste Ende des Hebezeugs zum ersten Motor (401) bewegt, der erste Drehzahlwert positiv ist, und wenn sich das erste Ende des Hebezeugs vom ersten Motor (401) weg bewegt, der erste Drehzahlwert negativ ist;
eine zweite Drehzahlerfassungseinheit (103), die dazu ausgelegt ist, einen zweiten Drehzahlwert des zweiten Motors (403) zu erfassen, wobei, wenn sich das zweite Ende des Hebezeugs zum zweiten Motor (403) bewegt, der zweite Drehzahlwert positiv ist, und wenn sich das zweite Ende des Hebezeugs vom zweiten Motor (403) weg bewegt, der zweite Drehzahlwert negativ ist;
**dadurch gekennzeichnet, dass** sie ferner Folgendes umfasst:
eine erste Drehzahldifferenzerfassungseinheit (105), die dazu ausgelegt ist, eine erste Drehzahldifferenz zwischen dem ersten Drehzahlwert und dem zweiten Drehzahlwert zu erfassen;
eine erste Drehzahldifferenzschwellwerterfassungseinheit (107), die dazu ausgelegt ist, einen ersten Drehzahldifferenzschwellwert zu erfassen; und
eine erste PI-Steuerung (109), die dazu ausgelegt ist, wenn die erste Drehzahldifferenz zwischen dem ersten Drehzahlwert und dem zweiten Drehzahlwert kleiner ist als der erste Drehzahldifferenzschwellwert, eine Steueranweisung an den ersten Motor zum Erhöhen eines Drehmomentausgabewertes des ersten Motors (401) in der Katzenfahrtrichtung zu senden.

13. System nach Anspruch 12, **dadurch gekennzeichnet, dass** es ferner Folgendes umfasst:
einen dritten Motor (405), der dazu ausgelegt ist, ein drittes Ende des Hebezeugs eines Krans zu ziehen, wobei das dritte Ende in einer Wagenfahrtrichtung das gegenüberliegende Ende des ersten Endes des Krans ist;
die Vorrichtung (10) umfasst ferner Folgendes:
eine dritte Drehzahlerfassungseinheit (201), die dazu ausgelegt ist, einen dritten Drehzahlwert des dritten Motors (405) zu erfassen, wobei, wenn sich das dritte Ende des Hebezeugs zum dritten Motor (405) bewegt, der dritte Drehzahlwert positiv ist, und wenn sich das dritte Ende des Hebezeugs vom dritten Motor (405) weg bewegt, der dritte Drehzahlwert negativ ist;
eine zweite Drehzahldifferenzerfassungseinheit (203), die dazu ausgelegt ist, eine zweite Drehzahldifferenz zwischen dem ersten Drehzahlwert und dem dritten Drehzahlwert zu erfassen;
eine zweite Drehzahldifferenzschwellwerterfassungseinheit (205), die dazu ausgelegt ist, einen zweiten Drehzahldifferenzschwellwert zu erfassen; und
eine zweite PI-Steuerung (207), die dazu ausgelegt ist, wenn die zweite Drehzahldifferenz zwischen dem ersten Drehzahlwert und dem dritten Drehzahlwert kleiner ist als der zweite Drehzahldifferenzschwellwert, eine Steueranweisung an den ersten Motor zum Erhöhen eines Drehmomentausgabewertes des ersten Motors (401) in der Wagenfahrtrichtung zu senden.

14. Speichermedium, das **dadurch gekennzeichnet ist, dass** es ein gespeichertes Programm umfasst, dass, wenn es läuft, die Vorrichtung nach einem der Ansprüche 7-11 steuert, wo das Speichermedium lokalisiert ist, um das Verfahren nach einem der Ansprüche 1 bis 6 zu implementieren.

15. Computerprogrammprodukt, das **dadurch gekennzeichnet ist, dass** es greifbar auf einem computerlesbaren Medium gespeichert ist und eine computerausführbare Anweisung umfasst, die, wenn sie ausgeführt wird, mindestens einen Prozessor der Vorrichtung nach einem der Ansprüche 7-11 veranlasst, das Verfahren nach einem der Ansprüche 1 bis 6 zu implementieren.

## Revendications

1. Procédé de commande d'une grue, **caractérisé en ce qu'**il comprend :
l'acquisition d'une première valeur de vitesse d'un premier moteur (S201), le premier moteur étant configuré pour tirer une première extrémité du palan de la grue, dans lequel, quand la première extrémité du palan se déplace vers le premier moteur, la première valeur de vitesse est positive, et quand la première extrémité du palan s'éloigne du premier moteur, la première valeur de vitesse est négative ;
l'acquisition d'une deuxième valeur de vitesse du deuxième moteur (S203), le deuxième moteur étant configuré pour tirer une deuxième extrémité du palan de la grue, la deuxième extrémité étant l'extrémité opposée de la première extrémité dans une direction de circulation de chariot de la grue, dans lequel, quand la deuxième extrémité du palan se déplace vers le deuxième moteur, la deuxième valeur de vitesse est positive, et quand la deuxième extrémité du palan s'éloigne du deuxième moteur, la deuxième valeur de vitesse est négative ;
l'acquisition d'une première différence de vitesse entre la première valeur de vitesse et la deuxième valeur de vitesse (S205) ;
l'acquisition d'un premier seuil de différence de vitesse(S207) ; et
si la première différence de vitesse entre la première valeur de vitesse et la deuxième valeur de vitesse est inférieure au premier seuil de différence de vitesse, l'envoi d'une instruction de commande au premier moteur pour augmenter une valeur de sortie de couple du premier moteur dans la direction de circulation de chariot (S209).

2. Procédé selon la revendication 1, **caractérisé en ce qu'**il comprend en outre :
l'acquisition d'une troisième valeur de vitesse d'un troisième moteur (S401), le troisième moteur étant configuré pour tirer une troisième extrémité du palan de la grue, la troisième extrémité étant l'extrémité opposée de la première extrémité dans une direction de circulation de chariot de la grue, dans lequel, quand la troisième extrémité du palan se déplace vers le troisième moteur, la troisième valeur de vitesse est positive, et quand la troisième extrémité du palan s'éloigne du troisième moteur, la troisième valeur de vitesse est négative ;
l'acquisition d'une deuxième différence de vitesse entre la première valeur de vitesse et la troisième valeur de vitesse (S403) ;
l'acquisition d'un deuxième seuil de différence de vitesse (S405) ; et
si la deuxième différence de vitesse entre la première valeur de vitesse et la troisième valeur de vitesse est inférieure au deuxième seuil de différence de vitesse, l'envoi d'une instruction de commande au premier moteur pour augmenter une valeur de sortie de couple du premier moteur dans la direction de circulation de chariot (S407).

3. Procédé selon la revendication 1, **caractérisé en ce qu'**il comprend en outre :
l'acquisition d'une première valeur cible de différence de vitesse,
dans lequel l'augmentation d'une valeur de sortie de couple du premier moteur dans la direction de circulation de chariot comprend l'augmentation d'une valeur de sortie de couple du premier moteur jusqu'à ce qu'une première différence de vitesse entre la première valeur de vitesse et la deuxième valeur de vitesse atteigne la première valeur cible de différence de vitesse.

4. Procédé selon la revendication 2, **caractérisé en ce qu'**il comprend en outre :
l'acquisition d'une deuxième valeur cible de différence de vitesse,
dans lequel l'augmentation d'une valeur de sortie de couple du premier moteur dans la direction de circulation de chariot comprend l'augmentation d'une valeur de sortie de couple du premier moteur jusqu'à ce qu'une deuxième différence de vitesse entre la première valeur de vitesse et la troisième valeur de vitesse atteigne la deuxième valeur cible de différence de vitesse.

5. Procédé selon la revendication 1 ou la revendication 2, **caractérisé en ce qu'**il comprend en outre :
l'acquisition d'une instruction d'activation, l'instruction d'activation étant utilisée pour permettre à une instruction de commande d'être envoyée au premier moteur pour augmenter une valeur de sortie de couple du premier moteur ; ou
l'acquisition d'une limite haute de couple et d'une limite basse de couple, dans lequel une valeur de sortie de couple du premier moteur est limitée pour ne pas dépasser la limite haute de couple ou la limite basse de couple ;
l'acquisition d'un paramètre proportionnel et d'un temps intégral, dans lequel une valeur de sortie de couple du premier moteur est régulée sur la base du paramètre proportionnel et du temps intégral.

6. Procédé selon la revendication 5, **caractérisé en ce qu'**il comprend en outre:
si la première différence de vitesse entre la première valeur de vitesse et la deuxième valeur de vitesse est supérieure à zéro, l'envoi d'une instruction de commande au premier moteur pour réduire une valeur de sortie de couple du premier moteur dans la direction de circulation de chariot ; ou
si la deuxième différence de vitesse entre la première valeur de vitesse et la troisième valeur de vitesse est supérieure à zéro, l'envoi d'une instruction de commande au premier moteur pour réduire une valeur de sortie de couple du premier moteur dans la direction de circulation de chariot.

7. Dispositif de commande d'une grue, comprenant :
une première unité d'acquisition de vitesse (101) configurée pour acquérir une première valeur de vitesse d'un premier moteur, le premier moteur étant configuré pour tirer une première extrémité du palan de la grue, dans lequel, quand la première extrémité du palan se déplace vers le premier moteur, la première valeur de vitesse est positive, et quand la première extrémité du palan s'éloigne du premier moteur, la première valeur de vitesse est négative ;
une deuxième unité d'acquisition de vitesse (103) configurée pour acquérir une deuxième valeur de vitesse d'un deuxième moteur, le deuxième moteur étant configuré pour tirer une deuxième extrémité du palan de la grue, la deuxième extrémité étant l'extrémité opposée de la première extrémité dans une direction de circulation de chariot de la grue, dans lequel, quand la deuxième extrémité du palan se déplace vers le deuxième moteur, la deuxième valeur de vitesse est positive, et quand la deuxième extrémité du palan s'éloigne du deuxième moteur, la deuxième valeur de vitesse est négative ;
**caractérisé en ce qu'**il comprend en outre :
une première unité d'acquisition de différence de vitesse (105) configurée pour acquérir une première différence de vitesse entre la première valeur de vitesse et la deuxième valeur de vitesse ;
une première unité d'acquisition de seuil de différence de vitesse (107) configurée pour acquérir un premier seuil de différence de vitesse ; et
un premier dispositif de commande PI (109) configuré pour, si la première différence de vitesse entre la première valeur de vitesse et la deuxième valeur de vitesse est inférieure au premier seuil de différence de vitesse, envoyer une instruction de commande au premier moteur pour augmenter une valeur de sortie de couple du premier moteur dans la direction de circulation de chariot.

8. Dispositif selon la revendication 7, **caractérisé en ce qu'**il comprend en outre :
une troisième unité d'acquisition de vitesse (201) configurée pour acquérir une troisième valeur de vitesse d'un troisième moteur, le troisième moteur étant configuré pour tirer une troisième extrémité du palan de la grue, la troisième extrémité étant l'extrémité opposée de la première extrémité dans une direction de circulation de chariot de la grue, dans lequel, quand la troisième extrémité du palan se déplace vers le troisième moteur, la troisième valeur de vitesse est positive, et quand la troisième extrémité du palan s'éloigne du troisième moteur, la troisième valeur de vitesse est négative ;
une deuxième unité d'acquisition de différence de vitesse (203) configurée pour acquérir une deuxième différence de vitesse entre la première valeur de vitesse et la troisième valeur de vitesse ;
une deuxième unité d'acquisition de seuil de différence de vitesse (205) configurée pour acquérir un deuxième seuil de différence de vitesse ; et
un deuxième dispositif de commande PI (207) configuré pour, si la deuxième différence de vitesse entre la première valeur de vitesse et la troisième valeur de vitesse est inférieure au deuxième seuil de différence de vitesse, envoyer une instruction de commande au premier moteur pour augmenter une valeur de sortie de couple du premier moteur dans la direction de circulation de chariot.

9. Dispositif selon la revendication 7, **caractérisé en ce qu'**il comprend en outre:
une première unité d'acquisition de valeur cible (301) configurée pour acquérir une première valeur cible de différence de vitesse, dans lequel
l'augmentation d'une valeur de sortie de couple du premier moteur dans la direction de circulation de chariot comprend l'augmentation d'une valeur de sortie de couple du premier moteur jusqu'à ce qu'une première différence de vitesse entre la première valeur de vitesse et la deuxième valeur de vitesse atteigne la première valeur cible de différence de vitesse.

10. Dispositif selon la revendication 8, **caractérisé en ce qu'**il comprend en outre :
une deuxième unité d'acquisition de valeur cible (303) configurée pour acquérir une deuxième valeur cible de différence de vitesse, dans lequel
l'augmentation d'une valeur de sortie de couple du premier moteur dans la direction de circulation de chariot comprend l'augmentation d'une valeur de sortie de couple du premier moteur jusqu'à ce qu'une deuxième différence de vitesse entre la première valeur de vitesse et la troisième valeur de vitesse atteigne la deuxième valeur cible de différence de vitesse.

11. Dispositif selon la revendication 7 ou la revendication 8, **caractérisé en ce qu'**il comprend en outre :
une unité d'acquisition d'instruction d'activation (305) configurée pour acquérir une instruction d'activation, l'instruction d'activation étant utilisée pour permettre à une instruction de commande d'être envoyée au premier moteur pour augmenter une valeur de sortie de couple du premier moteur ; ou
une unité d'acquisition de valeur limite (307) configurée pour acquérir une limite haute de couple et une limite basse de couple, dans lequel une valeur de sortie de couple du premier moteur est limitée pour ne pas dépasser la limite haute de couple ou la limite basse de couple ; ou
une unité d'acquisition de paramètre de régulation (309) configurée pour acquérir un paramètre proportionnel et un temps intégral, dans lequel une valeur de sortie de couple du premier moteur est régulée sur la base du paramètre proportionnel et du temps intégral.

12. Système de commande de grue, comprenant :
un premier moteur (401) configuré pour tirer une première extrémité du palan d'une grue ;
un deuxième moteur (403) configuré pour tirer une deuxième extrémité du palan de la grue, la deuxième extrémité étant l'extrémité opposée de la première extrémité dans une direction de circulation de chariot de la grue ;
un dispositif (10) pour commander une grue, comprenant :
une première unité d'acquisition de vitesse (101) configurée pour acquérir une première valeur de vitesse du premier moteur (401), dans lequel, quand la première extrémité du palan se déplace vers le premier moteur (401), la première valeur de vitesse est positive, et quand la première extrémité du palan s'éloigne du premier moteur (401), la première valeur de vitesse est négative ;
une deuxième unité d'acquisition de vitesse (103) configurée pour acquérir une deuxième valeur de vitesse du deuxième moteur (403), dans lequel, quand la deuxième extrémité du palan se déplace vers le deuxième moteur (403), la deuxième valeur de vitesse est positive, et quand la deuxième extrémité du palan s'éloigne du deuxième moteur (403), la deuxième valeur de vitesse est négative ;
**caractérisé en ce qu'**il comprend en outre :
une première unité d'acquisition de différence de vitesse (105) configurée pour acquérir une première différence de vitesse entre la première valeur de vitesse et la deuxième valeur de vitesse ;
une première unité d'acquisition de seuil de différence de vitesse (107) configurée pour acquérir un premier seuil de différence de vitesse ; et
un premier dispositif de commande PI (109) configuré pour, si la première différence de vitesse entre la première valeur de vitesse et la deuxième valeur de vitesse est inférieure au premier seuil de différence de vitesse, envoyer une instruction de commande au premier moteur pour augmenter une valeur de sortie de couple du premier moteur (401) dans la direction de circulation de chariot.

13. Système selon la revendication 12, **caractérisé en ce qu'**il comprend en outre :
un troisième moteur (405) configuré pour tirer une troisième extrémité du palan d'une grue, la troisième extrémité étant l'extrémité opposée à la première extrémité dans une direction de circulation de chariot de la grue ;
le dispositif (10) comprenant en outre :
une troisième unité d'acquisition de vitesse (201) configurée pour acquérir une troisième valeur de vitesse du troisième moteur (405), dans lequel, quand la troisième extrémité du palan se déplace vers le troisième moteur (405), la troisième valeur de vitesse est positive, et quand la troisième extrémité du palan s'éloigne du troisième moteur (405), la troisième valeur de vitesse est négative ;
une deuxième unité d'acquisition de différence de vitesse (203) configurée pour acquérir une deuxième différence de vitesse entre la première valeur de vitesse et la troisième valeur de vitesse ;
une deuxième unité d'acquisition de seuil de différence de vitesse (205) configurée pour acquérir un deuxième seuil de différence de vitesse ; et
un deuxième dispositif de commande PI (207) configuré pour, si la deuxième différence de vitesse entre la première valeur de vitesse et la troisième valeur de vitesse est inférieure au deuxième seuil de différence de vitesse, envoyer une instruction de commande au premier moteur pour augmenter une valeur de sortie de couple du premier moteur (401) dans la direction de circulation de chariot.

14. Moyen de stockage, **caractérisé en ce qu'**il comprend un programme stocké qui, lorsqu'exécuté, commande le dispositif, selon l'une quelconque des revendications 7 à 11, où le moyen de stockage est situé pour mettre en oeuvre le procédé selon l'une quelconque des revendications 1 à 6.

15. Produit de programme informatique, **caractérisé en ce qu'**il est concrètement stocké sur un moyen de stockage lisible par ordinateur et comprenant une instruction exécutable par ordinateur qui, lorsqu'exécutée, amène au moins un processeur du dispositif, selon l'une quelconque des revendications 7 à 11, à mettre en oeuvre le procédé selon l'une quelconque des revendications 1 à 6.
